# EUROPÄISCHE PATENTSCHRIFT

(11) **EP 2 255 869 B1**
(45) Veröffentlichungstag und Bekanntmachung des Hinweises auf die Patenterteilung: **13.06.2012**
(21) Anmeldenummer: 10163444.2
(22) Anmeldetag: 20.05.2010
(51) Int. Cl.: B01F 3/18, B01F 3/20, B01F 9/06, B01F 15/06, B29B 7/50, B01F 9/00

(54) **Horizontalmischer**
Horizontal mixer
Mélangeur horizontal

(30) Priorität: 26.05.2009 DE 202009004866 U
(43) Veröffentlichungstag der Anmeldung: 01.12.2010
(73) Patentinhaber: Dr. HERFELD GmbH & Co. KG, D-58809 Neuenrade (DE)
(72) Erfinder: Tölle, Ulrich, 32760 Detmold (DE); Rüberg, Wolfgang, 58708 Menden (DE); Herfeld, Dr. Matthias, 58636 Iserlohn (DE)
(74) Vertreter: Haverkamp, Jens

(56) Entgegenhaltungen:
- DE-A1- 1 607 767
- DE-A1- 2 523 875
- DE-B1- 1 954 563
- DE-U1- 20 114 490
- GB-A- 1 102 975
- US-A- 5 603 567

## Beschreibung

Die Erfindung betrifft einen Mischer zum Temperieren, etwa zum Kühlen eines aus Feststoffpartikeln bestehenden Mischgutes mit einem Mischbehälter zur Aufnahme des Mischgutes, welcher Behälter doppelwandig konzipiert ist und zumindest einen mit seiner Oberfläche zumindest teilweise in Kontakt mit den zu temperierenden Feststoffpartikeln gelangenden Temperiermittelkanal aufweist, durch den bei einem Betrieb des Mischers Temperiermittel gefördert wird, und mit einer Einrichtung zum Umwälzen des in dem Behälter befindlichen Mischgutes, wobei der Behälter um seine die beiden Stirnseiten durchstoßende Längsachse drehbar gelagert ist und als Umwälzeinrichtung ein motorischer Antrieb zum Drehen des Behälters vorgesehen ist.

Mischer der vorgenannten Art werden typischerweise eingesetzt, um Mischgut, welches zuvor in einem Mischer gemischt worden ist, zu kühlen. Derartige Mischer werden daher auch als Kühlmischer bezeichnet. Typischerweise ist einem solchen Kühlmischer in der Prozesskette ein so genannter Heizmischer vorgeschaltet. In diesen wird das zu mischende Gut eingebracht. Im Zuge des Mischvorganges erwärmt sich das darin eingebrachte Mischgut, welches anschließend zu seiner weiteren Handhabung gekühlt werden muss. Zu diesem Zweck wird derartiges Mischgut einem Kühlmischer zugeführt, der typischerweise unmittelbar an den Ausgang eines Heizmischers angeschlossen ist. Eingesetzt werden derartige Kühlmischer beispielsweise im Zusammenhang mit Hochleistungs-Mischsystemen, mit denen Kunststoffrohprodukte gemischt werden, wie etwa Kunststoffpulver für die PVC-Herstellung.

Vorbekannte Kühlmischer verfügen über einen Behälter mit einer gekühlten Innenwand. Zu diesem Zweck ist der Behälter doppelwandig aufgebaut, wobei in den oder die durch die Doppelwandigkeit gebildeten Kanäle Kühlwasser als Kühlmittel geleitet wird. Somit bildet jeweils ein Teil eines Kühlkanals die Innenwand des Behälters aus, wobei im Zuge des Mischprozesses das Mischgut an diesem gekühlten Wandabschnitt vorbeigefördert wird. In dem Behälter befinden sich motorisch angetriebene Mischwerkzeuge zum Umwälzen des darin eingefüllten zu kühlenden Mischgutes. Die Mischwerkzeuge mit ihrem motorischen Antrieb stellen somit eine Umwälzeinrichtung zum Umwälzen des zu kühlenden Mischgutes dar.

Der Behälter eines solchen Kühlmischers weist typischerweise eine kreisförmige Querschnittsfläche auf. In Abhängigkeit von einer horizontalen oder einer waagerechten Ausrichtung des Behälters werden Horizontal-kühlmischer und Vertikalkühlmischer unterschieden. In beiden Fällen bildet die Innenseite der ringförmigen Wand des Behälters die Kühlfläche, an der das zu kühlende Mischgut im Zuge des Umwälzens durch einen Betrieb der Mischwerkzeuge abgekühlt wird. Die Mischbehälter verfügen jeweils über zwei Anschlussstutzen - einen, mit dem der Kühlmischer an den Ausgang eines vorgeschalteten Hochleistungsmischers angeschlossen ist, und einen weiteren zum Ausgeben des gekühlten Mischgutes. Bei Vertikal-Kühlmischern ist der Befüllungsstutzen an der oberen Deckelklappe befestigt. Der Entleerungsstutzen befindet sich an der radialen Außenseite der ringförmigen Seitenwand. Bei einem Horizontal-Kühlmischer befinden sich der Auslaufstutzen und der Befüllungsstutzen typischerweise in der Mitte des insgesamt zylindrischen Kühlbehälters, wobei der Befüllungsstutzen im Bereich des oberen Scheitels und der Auslaufstutzen im Bereich des unteren Scheitels des Mischbehälters angeordnet sind.

Bei den vorbekannten Kühlmischern ist ein Verschleiß an der Behälterwandung zu beobachten, und zwar in dem Bereich der Bewegungsbahnen der Mischwerkzeuge, auch wenn diese an der Innenseite der Behälterwandung tatsächlich nicht anliegen. Dieses ist unerwünscht. Überdies kann durch den Abrieb eine Kontamination des gekühlten Mischgutes erfolgen. Bei einem Betrieb eines solchen Kühlmischers ist darauf zu achten, dass die Prozesszeit, die zum Kühlen einer Mischgutcharge notwendig ist, nicht länger ist als die Prozesszeit, die zum Durchführen des beispielsweise mittels eines Heizmischers vorgeschalteten Mischvorganges benötigt wird. Dieses ist insbesondere bei einem Mischen von temperaturkritischem Mischgut, wie beispielsweise beim Mischen von Kunststoffpulver für die PVC-Herstellung entscheidend. Innerhalb eines solchen Prozesstaktes muss innerhalb des Kühlmischers nicht nur das eingebrachte Mischgut auf seine bestimmungsgemäße Temperatur abgekühlt werden, sondern auch das weitere Handling abgeschlossen sein, namentlich das Befüllen des Behälters sowie das Ausgeben des gekühlten Mischgutes.

Bei dem Betrieb eines solchen Kühlmischers ist eine möglichst gleichmäßige Kühlung des eingebrachten Mischgutes gewünscht. Aufgrund der Anordnung des Auslaufstutzens an der gekühlten Wand des Behälters, trägt dieser Teil des Behälters nicht zur Kühlung des eingebrachten Mischgutes bei. Hierdurch geht gerade in demjenigen Bereich, in dem das zu kühlende Material Kontakt mit der Behälterinnenwand aufweist, Kühlfläche verloren.

Bei einem Wechsel des zu kühlenden Mischgutes von einem Material zu einem anderem ist die Reinigung eines solchen vorbekannten Kühlmischers aufwendig. Dieses liegt daran, dass ein aufgrund der Geometrie des Mischbehälters nicht entleerbarer Rest regelmäßig in dem Mischbehälter verbleibt und die der Umwälzung dienenden bewegten Werkzeuge gereinigt werden müssen.

GB 1,102,975 A offenbart einen Drehmischer für Pulver und/oder Flüssigkeiten. Bei diesem Mischer ist der Behälter um seine Längsachse drehbar gelagert. Zum Temperieren des Behälters kann dieser gemäß einer Ausgestaltung in ein Temperiermittelbad eingetaucht gehalten sein. Offenbart ist in diesem Dokument ebenfalls eine Ausgestaltung, bei der Behälter doppelwandig ist und somit einen Wassermantel aufweisen kann. Im Behälterinneren sind feststehende Schaufeln mit einer im Wesentlichen tangentialen Ausrichtung angeordnet.

Ausgehend von diesem diskutierten Stand der Technik liegt der Erfindung daher die Aufgabe zugrunde, einen eingangs genannten Mischer dergestalt weiterzubilden, dass nicht nur die Nachteile gegenüber solchen Mischern vermieden sind, die innerhalb des Behälters bewegte Werkzeuge aufweisen, sondern bei dem zudem die Temperierleistung verbessert ist.

Gelöst wird diese Aufgabe durch einen Mischer der eingangs genannten Art, bei dem der Behälter umfänglich verteilt mehrere, insbesondere parallel zu seiner Drehachse verlaufende Temperiermittelkanäle und zur Vergrößerung seiner inneren Oberfläche in radialer Richtung nach innen vorspringende, als Hohlleisten ausgeführte Strukturen aufweist, wobei die nach innen vorspringenden Strukturen als Temperiermittelkanäle ausgeführt sind.

Dieser Mischer verfügt über einen drehbar gelagerten Behälter. Der Behälter ist motorisch drehbar angetrieben. Damit stellt der motorische Antrieb des Behälters die Umwälzeinrichtung zum Umwälzen des in den Behälter eingebrachten Mischgutes dar oder wenn weitere Komponenten beteiligt sind, zumindest teilweise dar. Der Behälter ist um seine Längsachse drehbar, die zumindest für den Vorgang des Mischens horizontal oder annährend horizontal ausgerichtet ist. Somit durchstößt die Drehachse bei dem Vorgang des Mischens die Stirnseiten des Mischbehälters. Es versteht sich, dass die Drehachse die Stirnseiten des Mischbehälters nicht körperlich durchstoßen muss. Vielmehr ist hiermit die Lage der Drehachse gemeint. Bei einem Drehen des Behälters wird das darin befindliche Mischgut umgewälzt und in diesem Zuge sukzessive in Kontakt mit der inneren Mantelfläche des Behälters gebracht. Da der Behälter rotierend angetrieben ist, kann die gesamte, von dem Behälter bereitgestellte Innenwand als nutzbare Kühlfläche verwendet werden. Dieses hat zum Vorteil, dass aufgrund der Möglichkeiten der Nutzung der gesamten Behälterinnenwand als Temperierfläche der Mischbehälter und damit der Mischer als Ganzes kompakter bauend ausgelegt werden kann. Für die Zwecke des Kühlens wird in aller Regel nicht die gesamte Innenwand des Temperiermischers in Kontakt mit dem zu temperierenden, beispielsweise zu kühlenden Mischgut gebracht. Bei einem rotatorisch angetriebenen Mischbehälter liegt das zu temperierende Mischgut zum Teil an der Behälterinnenwand an. Dies hat zur Folge, dass jeder Behälterwandabschnitt nur über einen bestimmten Drehwinkelabschnitt zyklisch in Kontakt mit dem Mischgut steht. Bei einem als Kühlmischer konzipierten Mischer bedeutet dieses, dass ein Behälterinnenwandabschnitt, der aus dem Mischgut herausgedreht wird, im Zuge der weiteren Drehbewegung und der fortdauernden Kühlung insgesamt herabgekühlt wird, bevor dieser Behälterinnenwandabschnitt wieder in Kontakt mit dem zu kühlenden Mischgut gelangt. Der auf diese Weise abgekühlte Innenwandabschnitt gelangt aufgrund der Drehbewegung der Behälterinnenwand sodann wieder in Kontakt mit dem bei diesem Ausführungsbeispiel zu kühlenden Mischgut. Dieses erklärt die besonders effektive und daher zeitsparende Kühlung. Gleiches gilt in umgekehrter Weise ebenfalls für den Fall, dass mit einem solchen Mischer Mischgut erwärmt werden soll. Grundsätzlich ist auch ein oszillatorischer Antrieb des Behälters denkbar, wobei vorzugsweise eine oszillatorische Bewegung soweit ausgeführt wird, dass zumindest die in Bewegungsrichtung jeweils weisende randlichen Behälterabschnitte aus dem Mischgut im Zuge der oszillatorischen Bewegung herausgeführt werden.

Die Innenwandung des Behälters ist durch Einbauten, vorzugsweise in einer längsaxialen Ausrichtung strukturiert, wobei diese Einbauten als Kühlmittelkanäle konzipiert sind. Hierdurch wird die innere Oberfläche des Behälters und damit die zur Verfügung gestellte Kühlfläche vergrößert. Derartige Einbauten verbessern nicht nur die Kühlleistung, sondern verbessern zudem das Umwälzen des darin befindlichen zu kühlenden Mischgutes.

Vorzugsweise ist ein solcher Mischer als Kühlmischer konzipiert. Dieser benötigt grundsätzlich keine Mischwerkzeuge, insbesondere keine angetriebenen Mischwerkzeuge, so dass bei diesem Kühlmischer im Zuge des Umwälzens im Unterschied zu vorbekannten Kühlmischern keine oder zumindest keine nennenswerte Wärme in das Mischgut eingebracht wird. Dieses Phänomen ist bei vorbekannten Kühlmischern mit innenliegenden, angetriebenen Werkzeugen zu beobachten, so dass auch aus diesem Grunde bei dem Kühlmischer gemäß dieser Erfindung eine effektivere Kühlung möglich ist. Die zum Anschließen des Mischbehälters an eine Mischgutzuführung sowie an eine Auslaufleitung notwendigen Anschlussstutzen befinden sich typischerweise an den Stirnseiten des vorzugsweise zylindrischen Behälters. Damit kann bei diesem Kühlmischer die gesamte zylindrische Mantelfläche als Kühlfläche genutzt werden.

Gemäß einem Ausführungsbeispiel ist vorgesehen, dass der Behälter zusätzlich zu seiner Drehbarkeit um eine quer zu seiner Drehachse verlaufende Achse schwenkbar gelagert ist. Diese schwenkbare Aufhängung des Behälters gestattet eine Verstellung desselben aus einer Befüllungsstellung in eine Mischstellung mit horizontal oder leicht geneigt dazu verlaufender Längsachse. Gleichermaßen kann der Mischbehälter aus seiner Mischstellung in eine Entleerungsstellung verschwenkt werden, in der das gekühlte Mischgut aus dem Behälter ausgegeben werden kann, wobei die Entleerungsstellung dieselbe Stellung wie die Befüllungsstellung des Mischbehälters sein oder sich auch von dieser unterscheiden kann. Bei einer Ausgestaltung, bei der der Mischbehälter eine andere Raumlage während des Mischens einnimmt als in seiner Befüllungsstellung und/oder seiner Entleerungsstellung werden Anschlussstutzen eingesetzt, die als Kupplungen zum lösbaren Anschließen an komplementäre Kupplungen einer Mischgutzuführung bzw. einer Auslaufleitung konzipiert sind. Ein Öffnen und Schließen der notwendigen Klappen oder Ventile zum Sperren bzw. Öffnen eines Zu- bzw. eines Ausschlusses der beiden miteinander in Eingriff zu stellenden Kupplungsteile kann manuell oder durch Einsatz eines einen Aktor beaufschlagenden Stellmediums, beispielsweise Luft erfolgen. Die schwenkbare Lagerung des Behälters gestattet auch eine Ausbildung, bei der der Mischbehälter nur einem einzigen Anschlussstutzen aufweist, über den der Behälter befüllt und auch entleert werden kann. Bei einer Befüllung wird der Behälter in eine Anordnung gebracht, dass aus der Mischgutzuführung über diesen das Mischgut von oben in den Behälter einlaufen kann. Durch Schwenken kann dieser Anschlussstutzen in eine nach unten weisende Ausrichtung zum Entleeren des Behälters gebracht werden. Die Mischstellung des Behälters befindet sich typischer Weise zwischen diesen beiden Endstellungen.

Die Lagerung des Behälters ist gemäß einem Ausführungsbeispiel in einem Gestell vorgesehen, gegenüber welchem der Behälter schwenkbar ist. Zur drehbaren Lagerung kann eine Rollenlagerung vorgesehen sein, wobei der Behälter bei einer solchen Ausgestaltung typischer Weise über Führungsschienen verfügt, in die die Rollen der Rollenlagerung eingreifen. Wenigstens eine dieser Rollen ist zum Drehen des Behälters motorisch angetrieben. Bei einer solchen Ausgestaltung kommt den Rollen nicht nur die Funktion der drehbaren Lagerung bei einer Rotation des Behälters für den Vorgang des Kühlens zu, sondern durch ihr Eingreifen in die Führungsschienen ebenfalls zum Halten des Behälters, wenn dieser um seine quer zur Drehachse verlaufende Schwenkachse verschwenkt wird. So dann hängen die Führungsschienen an den Rollen der Rollenlagerung. Zweckmäßig ist eine Ausgestaltung bei der die Führungsschienen als in radialer Richtung nach außen offene U-Führungen ausgeführt sind, wobei der Abstand der Seitenwandungen im Wesentlichen der Dicke einer darin eingreifenden Rolle, entspricht. Anstelle oder auch zusätzlich zu der vorbeschriebenen Lagerung können Halterollen und/oder Halterollenpaare zum Halten des drehbaren Mischbehälters vorgesehen sein, die typischerweise an den Außenseiten zumindest einer Führungsschiene angreifen, so dass das Gewicht des Mischbehälters in einer nicht horizontalen Ausrichtung zumindest anteilig über die Halterollen oder Halterollenpaare in das Gestell eingeleitet wird.

Weitere Vorteile und Ausgestaltungen der Erfindung ergeben sich aus der nachfolgenden Beschreibung von Ausführungsbeispielen unter Bezugnahme auf die beigefügten Figuren. Es zeigen:
- **Fig. 1**:: eine perspektivische Ansicht eines Kühlmischers in seiner Be- füllungsstellung, angeschlossen an eine Mischgutzuführung,
- **Fig. 2:**: eine Rückseitenansicht des Kühlmischers der Figur 1,
- **Fig. 3:**: eine Seitenansicht des Kühlmischers der Figuren 1 und 2 in seiner Mischstellung,
- **Fig. 4:**: eine schematisierte Querschnittsdarstellung des Mischbehälters des Kühlmischers der vorangegangen Figuren,
- **Fig. 5:**: eine schematisierte Querschnittsdarstellung eines weiteren Mischbehälters eines Kühlmischers,
- **Fig. 6:**: der zylindrische Teil eines Mischbehälters eines Kühlmischers gemäß einer weiteren Ausgestaltung in einer perspektivischen Ansicht,
- **Fig. 7:**: der Mischbehälter der Figur 6 in einer Stirnseitenansicht,
- **Fig. 8:**: in einer perspektivischen Darstellung einen als Hohlleiste kon- zipierten Kühlmittelkanal,
- **Fig. 9:**: die Durchführung eines Anschlusses einer Hohlleiste durch die Behälterwand des Mischbehälters der Figuren 6 bzw. 7,
- **Fig. 10:**: der zylindrische Teil eines weiteren Mischbehälters eines Kühl- mischers gemäß noch einer weiteren Ausgestaltung in einer perspektivischen Ansicht und
- **Fig. 11:**: der Mischbehälter der Figur 10 in einer Stirnseitenansicht.

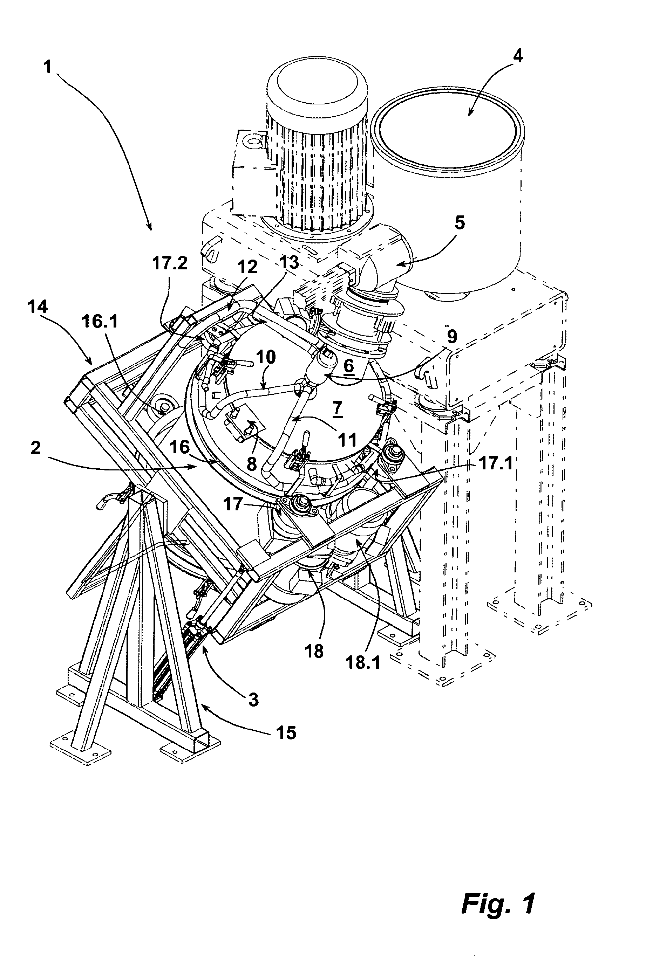

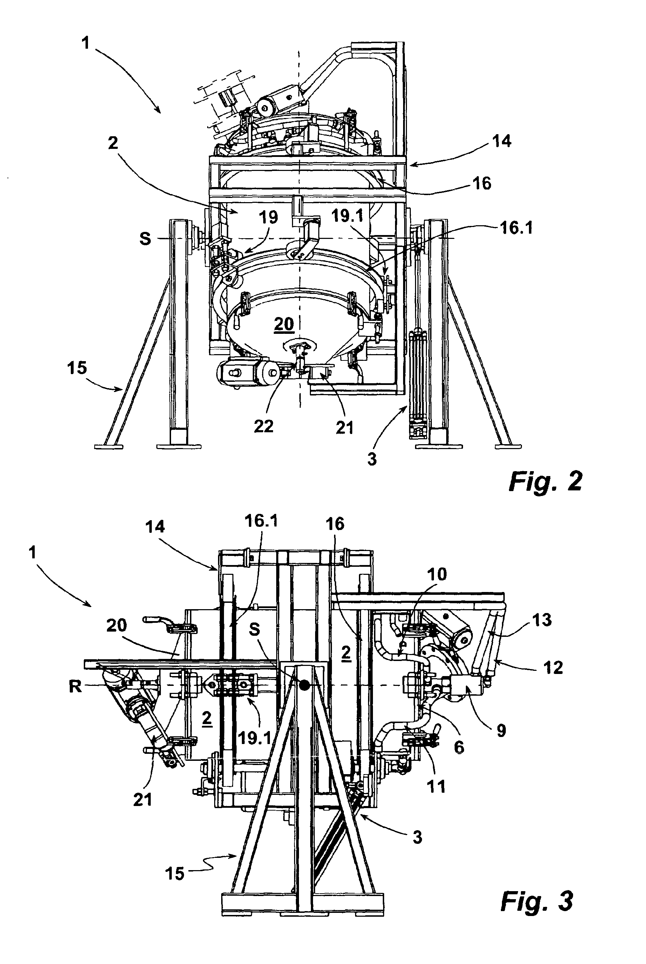

Ein als Kühlmischer 1 konzipierter Temperiermischer verfügt über einen Mischbehälter 2, der mittels eines Stellzylinders 3 um eine horizontal verlaufende Schwenkachse S (vgl. Figur 3) schwenkbar ist. In Figur 1 benachbart zu dem Kühlmischer 1 ist der Mischbehälter 2 in seiner Befüllungsstellung gezeigt, welche Stellung die ausgefahrene Endstellung des Stellzylinders 3 darstellt. Gestrichelt ist in Figur 1 benachbart zu dem Kühlmischer 1 ein Heizmischer 4 gezeigt, dessen Ausgang die Mischgutzuführung 5 für den Kühlmischer 1 bildet. In seiner in Figur 1 gezeigten Befüllungsstellung ist der Mischbehälter 2 mittels einer pneumatisch aktivierbaren Kupplung an die Mischgutzuführung 5 angeschlossen, und zwar mittels eines Befüllungsstutzens, an dessem freien Ende das behälterseitige Kupplungsglied zum Anschließen des Befüllungsstutzens 6 an das mischgutzuführungsseitige Kupplungsglied angeordnet ist. Durch den Befüllungsstutzen 6 ist eine Wegsamkeit von der Mischgutzuführung 5 in das Innere des Mischbehälters 2 bereitgestellt. Teil der Mischgutzuführung 5 ist ein Ventil zum Öffnen und Schließen der Mischgutzuführung 5, welches typischerweise als Stellklappe ausgebildet ist. Gleichfalls verfügt der Befüllungsstutzen 6 bzw. das befüllungsstutzenseitige Kupplungsglied über einen Verschlussmechanismus zum Verschließen des Befüllungsstutzens 6, wenn dieser nicht an die Mischgutzuführung 5 angeschlossen ist. Ein solcher Verschluss kann ebenfalls nach Art einer Klappe oder auch nach Art einer Lamellenblende konzipiert sein. Der behälterseitige Verschlussmechanismus ist pneumatisch aktivierbar.

Wie aus Figur 1 erkennbar, befindet sich der Befüllungsstutzen 6 an einer Stirnseite 7 des ansonsten zylindrisch ausgeführten Mischbehälters 2. Der Befüllungsstutzen 6 ist außermittig an der Stirnseite 7 angeordnet. Die Stirnseite 7 ist als Klappe ausgeführt und kann zu Reinigungszwecken mittels eines Scharniers 8 geöffnet werden. Integriert in die Stirnseite 7 ist eine Drehdurchführung 9 zum Zuführen von Kühlflüssigkeit, beispielsweise Kühlwasser in die Behälterwandung sowie zum Herausführen der im Zuge eines Kühlvorganges erwärmten Kühlflüssigkeit. Der behälterseitige Zulauf ist in den Figuren mit dem Bezugszeichen 10 und der Rücklauf mit dem Bezugszeichen 11 gekennzeichnet. Statorseitig sind an die Drehdurchführung 9 eine Zuleitung 12 sowie eine Ableitung 13 angeschlossen. Über die Zuleitung 12 wird mit einem gewissen Druck Kühlflüssigkeit zugeführt. Über die Ableitung 13 wird die im Zuge des Kühlens durch den Mischbehälter 2 erwärmte Kühlflüssigkeit abgeführt.

Der Mischbehälter 2 ist in einem Schwenkgestell 14 gehalten, das gegenüber einem Grundgestell 15 mittels des bereits vorstehend beschriebenen Stellzylinders 3 verschwenkbar ist. Somit stützt sich der Stellzylinder 3 einerseits an dem Grundgestell 15 und andererseits an dem Schwenkgestell 14, wie insbesondere in Figuren 1 und 3 ersichtlich, ab. In dem Schwenkgestell 14 ist der Mischbehälter 2 wiederum um seine die beiden Stirnseiten zentrisch durchstoßende Längsachse drehbar gelagert und zum Ausüben einer Drehbewegung um die Längsachse motorisch angetrieben. Die Längsachse bildet somit die Rotationsachse R (siehe Figur 3) des Behälters 2. Die Drehdurchführung 9 ist koaxial in Bezug auf die Rotationsachse R angeordnet. Zur Lagerung des Mischbehälters 2 verfügt dieser über zwei mit Abstand zueinander angeordnete, in radialer Richtung nach außen offene, U-förmig profilierte Führungsschienen 16, 16.1. Die Führungsschienen sind konzentrisch zur Rotationsachse R angeordnet. In die Führungsschienen 16, 16.1 greifen jeweils drei Rollen ein, die der Übersicht halber lediglich zu der Führungsschiene 16 mit den Bezugszeichen 17, 17.1, 17.2 kenntlich gemacht sind. Zumindest eine dieser Rollen 17, 17.1, 17.2 ist motorisch angetrieben. Bei dem dargestellten Ausführungsbeispiel ist die Rolle 17 mittels eines Elektromotors 18 angetrieben. Da sich die Rolle 17 in der Führungsschiene 16 abstützt, wird bei einem Antrieb der Rolle 17 die Führungsschiene 16 und damit der mit den Führungsschienen 16, 16.1 eine gegenständliche Einheit bildende Mischbehälter 2 in Rotation versetzt. Mit dem Bezugszeichen 18.1 ist in Figur 1 der Elektromotor zum Antreiben der motorisch angetriebenen, in die Führungsschiene 16.1 eingreifende Rolle kenntlich gemacht. Die Drehgeschwindigkeit des Mischbehälters 2 ist einstellbar.

Anstelle der U-förmig profilierten Führungsschienen 16, 16.1 ist in einem weiteren Ausführungsbeispiel vorgesehen, geschlossene Führungsprofile vorzusehen, insbesondere rechteck-förmige. Der Rollenantrieb ist bei einer solchen Ausgestaltung dergestalt konzipiert, dass die motorisch angetriebene Rolle typischer Weise auf der nach außen weisenden Seite angreift und zwei zusätzliche Führungsrollen vorgesehen sind, zwischen denen die Führungsschiene verläuft.

Zum positionsgenauen Einschwenken des Mischbehälters 2 durch Betätigen des Stellzylinders 3 sind an der Mischgutzuführung 5 entsprechende Anschläge und/oder Sensoren und/oder Mikroschalter angebracht. Dabei sind die Aktoren zum Öffnen der jeweiligen Klappen bzw. Ventile in der Mischgutzuführung 5 einerseits und in dem Befüllungsstutzen 6 bzw. in dem diesbezüglichen Kupplungsteil erst zum Öffnen ansteuerbar, wenn die beiden miteinander in Eingriff zu stellenden Kupplungsglieder bestimmungsgemäß in Eingriff miteinander gestellt sind. Ein solches Ankuppeln des Befüllungsstutzens 6 an die Mischgutzuführung erfolgt vollautomatisch.

Figur 2 zeigt den Kühlmischer 1 in seiner in Figur 1 gezeigten Stellung in einer Rückseitenansicht ohne den gestrichelt in Figur 1 gezeigten Heizmischer. Aus dieser Rückseitenansicht wird erkennbar, dass an der Führungsschiene 16.1 neben den vorbeschriebenen, für die Lagerung des Mischbehälters 2 um seine Rotationsachse R verantwortlichen Rollen zusätzlich drei Halterollenpaare, von denen aufgrund der Perspektive nur zwei Halterollenpaare 19, 19.1 erkennbar sind, angreifen. Die Halterollenpaare 19, 19.1 verfügen jeweils über zwei voneinander beabstandete Rollen, die einen solchen Abstand voneinander aufweisen, dass diese an den äußeren Seitenwänden der U-förmig profilierten Führungsschiene 16.1 anliegen. Somit wird je nach Raumlage des Mischbehälters 2 sein Gewicht oder zumindest ein Teil seines Gewichtes über die Halterollenpaare 19, 19.1 aufgefangen und in die Gestelle 14, 15 eingeleitet.

Die der Stirnseite 7 gegenüberliegende Stirnseite 20 des Mischbehälters 2 ist kegelstumpfförmig ebenfalls als Klappe ausgeführt. Außermittig in Bezug auf die Rotationsachse R trägt die Stirnseite 20 einen Entleerungsstutzen 21, über den das gekühlte Mischgut aus dem Mischbehälter 2 entleert werden kann. Teil des Entleerungsstutzens 21 ist ebenfalls ein Verschlusselement, durch das der Entleerungsstutzen 21 bei Nichtgebrauch verschlossen ist. Ebenso wie das Verschlusselement in dem Befüllungsstutzen 6 ist auch das Verschlusselement in dem Entleerungsstutzen 21 bei dem dargestellten Ausführungsbeispiel pneumatisch aktivierbar. Zentrisch und damit fluchtend mit der Rotationsachse R des Mischbehälters 2 ist in der Stirnseite 20 eine Drehdurchführung 22 angeordnet. Die Drehdurchführung 22 dient zum Übertragen von statorseitig bereitgestellter Druckluft zu den an dem drehbar gelagerten Mischbehälter 2 angeordneten Aktoren, namentlich die Aktoren zum Betätigen der Verschlusselemente in dem Befüllungsstutzen 6 und dem Entleerungsstutzen 21.

Figur 2 zeigt den Kühlmischer mit seinem Mischbehälter 2 in seiner Entleerungsstellung, in der der Entleerungsstutzen 21 an eine in den Figuren nicht dargestellte Entleerungsleitung angeschlossen ist. Somit stellt die in den Figuren 1 und 2 gezeigte Stellung des Mischbehälters 2 sowohl seine Befüllungsstellung als auch seine Entleerungsstellung dar. Infolge dessen kann unmittelbar nach Beenden des Entleerungsvorganges und Schließen des Entleerungsstutzens 21 der Befüllungsstutzen 6 geöffnet und die nächste Charge von zu kühlendem Mischgut über die Mischgutzuführung 5 in das Behälterinnere eingebracht werden. Dieses ist gerade bei kurzen Prozesszeiten zweckmäßig.

Zum Durchführen des eigentlichen Mischvorganges wird der Mischbehälter 2 gegenüber seiner in den Figuren 1 und 2 gezeigten Stellung mittels des Stellzylinders 3 verschwenkt, bis dass sich seine Rotationsachse R in einer Horizontalen, wie in Figur 3 gezeigt, befindet. In dieser Stellung wird der Mischbehälter 3 über die Elektromotoren 18, 18.1 und die in die Führungsschienen 16, 16.1 eingreifenden Antriebsrollen in eine Drehbewegung versetzt. Das innerhalb des Mischbehälters 2 befindliche, zu kühlende Mischgut wird im Zuge dieses Vorgangs an der Innenwand des Mischbehälters 2 gekühlt und im Zuge der Drehbewegung des Mischbehälters 2 sukzessive umgewälzt. Je nach zu kühlendem Material kann es zweckmäßig sein, die zum Kühlen und Umwälzen des Mischgutes ausgeführte Drehbewegung des Mischbehälters 2 mit einer oszillierenden Schwenkbewegung um die Schwenkachse S zu überlagern.

Während des Kühlvorganges ist die Zuleitung 12 und daher der an die Drehdurchführung 9 behälterseitig angeschlossen Zulauf 10 mit Kühlflüssigkeit, beispielsweise Wasser mit einem gewissen Druck beaufschlagt. Die Kühlflüssigkeit wird über den Zulauf 8 in die in die Doppelwand des Mischbehälters 2 integrierten Kühlmittelkanäle eingebracht. Dabei kann vorgesehen sein, dass der Behälter 2 mehrere Kühlmittelkreisläufe aufweist. Das über den Rücklauf 11 aus dem Kühlmittelkreislauf zurückgeführte erwärmte Kühlwasser wird über den Rücklauf 11, die Drehdurchführung 9 und die Ableitung 13 weggeführt.

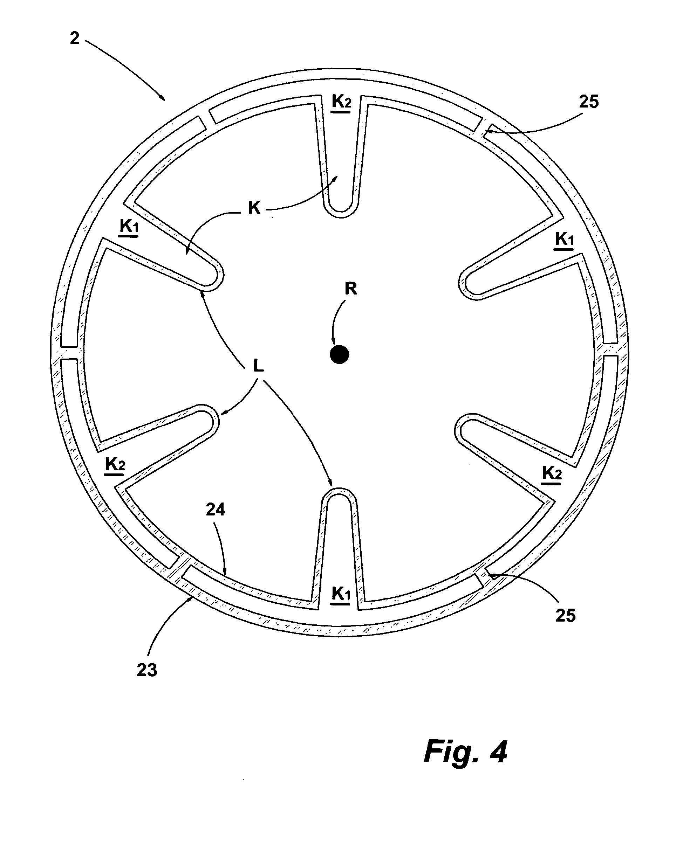

Figur 4 zeigt anhand eines Ausführungsbeispiels schematisiert einen möglichen Aufbau der Kühlmittelkanäle des Mischbehälters 2, der in Figur 4 nur schematisiert und ohne die weiteren, in den voran gegangenen Figuren erkennbaren zusätzliche Elemente und Aggregate gezeigt ist. Der Mischbehälter 2 ist doppelwandig konzipiert. Die äußere Wand ist mit dem Bezugszeichen 23 und die Innwand mit dem Bezugszeichen 24 gekennzeichnet. Der zwischen der äußeren Wand 23 und der Innenwand 24 befindliche Hohlraum ist durch mehrere Schotte 25 in einzelne Kühlmittelkanäle K unterteilt. Bei dem in Figur 4 gezeigten Ausführungsbeispiel sind insgesamt drei Kreisläufe vorgesehen, wobei jeder Kreislauf über einen Hinkanal K₁ und einen Rückkanal K₂ verfügt, die im Bereich der Stirnseite 20 miteinander verbunden sind.

Die Innenwand 24 ist durch in radialer Richtung nach innen vorspringende Hohlleisten L strukturiert. Die Hohlleisten L sind Teil jeweils einer Kühlmittelkammer K. Durch diese Maßnahme wird nicht nur die innere Oberfläche der Innenwand 24 und damit die zur Kühlung zur Verfügung gestellte Fläche vergrößert, sondern die Hohlleisten L unterstützen bei einer Rotation des Mischbehälters 2 den Umwälzprozess des in diesen eingebrachten Mischgutes.

Es versteht sich, dass die Konzeption des Mischbehälters 2, wie in Figur 4 gezeigt, nur eine von zahlreichen Möglichkeiten ist, die innere Mantelfläche eines Mischbehälters zu kühlen bzw. zu strukturieren. Beispielsweise können anstelle der in dem Ausführungsbeispiel gezeigten Hohlleisten L auch zahlreiche kleinere Wellenstrukturen vorgesehen sein.

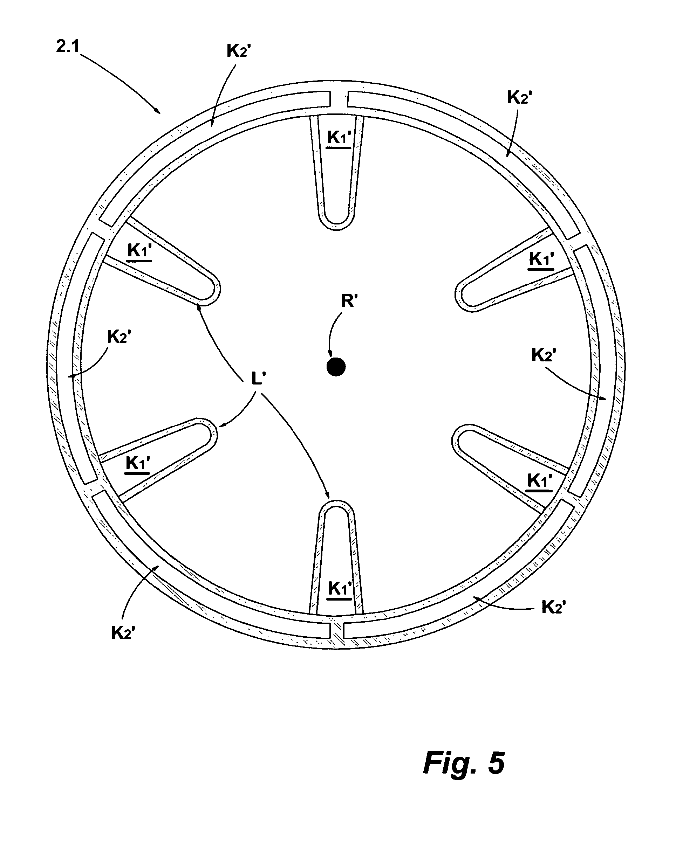

Figur 5 zeigt eine von mehreren weiteren Möglichkeiten, die Kühlmittelkanäle in dem Mischbehälter eines Kühlmischers auszubilden. Prinzipiell ist der Mischbehälter 2.1 des Ausführungsbeispiels der Figur 5 ebenso aufgebaut wie der Mischbehälter 2 der Figuren 1 bis 4. Der Mischbehälter 2.1 unterscheidet sich lediglich hinsichtlich der Führung seiner Kühlmittelkanäle von dem Mischbehälter 2. Bei dem Mischbehälter 2.1 sind die als Hohlleisten L' ausgebildeten Kühlmittelkanäle K₁' die Hinkanäle, wobei diese auf die Hohlleisten L' beschränkt sind. Die Rückkanäle K₂' sind in den zwischen den beiden Wänden befindlichen Hohlraum angeordnet und ebenso wie bei dem Ausführungsbeispiel der Figuren 1 bis 4 durch Schotte voneinander getrennt.

Nach Durchführen des Mischvorganges wird der Mischbehälter 2 wiederum in seine in den Figuren 1 und 2 gezeigte Befüllungs- und Entleerungsstellung gebracht und nach Anschließen des Entleerungsstutzens 21 an eine Auslaufleitung dieser zur Entleerung geöffnet.

Die vorbeschriebene Ausgestaltung des Innenraums des Mischbehälters 2 mit seinen seiner Längserstreckung folgenden Hohlleisten L, die sich im Wesentlichen über zylindrischen Abschnitt des Mischbehälters 2 erstrecken und die in Figuren 1 und 2 gezeigte geneigte Anordnung zum Entleeren, bei welcher Entleerungsstellung sich der Entleeerungsstutzen 21 im Bereich des Tiefsten der kegelstumpfförmigen Stirnseite 20 befindet, machen deutlich, dass das gekühlte Mischgut aus dem Mischbehälter vollständig auslaufen kann. Infolge der Neigung des Mischbehälters in seiner Entleerungsstellung läuft der Entleerungsvorgang ebenfalls rascher ab als dieses bei herkömmlichen Mischern der Fall ist. Dieses und der Umstand, dass die Stirnseiten 7, 20 des Behälters 2 geöffnet werden können, macht deutlich, dass eine Reinigung des Innenraums des Mischbehälters 2 denkbar einfach durchführbar ist, insbesondere da in diesem im Unterschied zum Stand der Technik keine bewegten, motorisch angetriebenen Werkzeuge angeordnet sind, die gereinigt werden müssten. Das Reinigen des Mischbehälters ist in kürzester Zeit möglich. Infolge der Verschwenkbarkeit des Mischbehälter braucht auch die Mischgutzuführung nicht verschwenkt oder abgebaut zu werden, um den Mischbehälter zu reinigen.

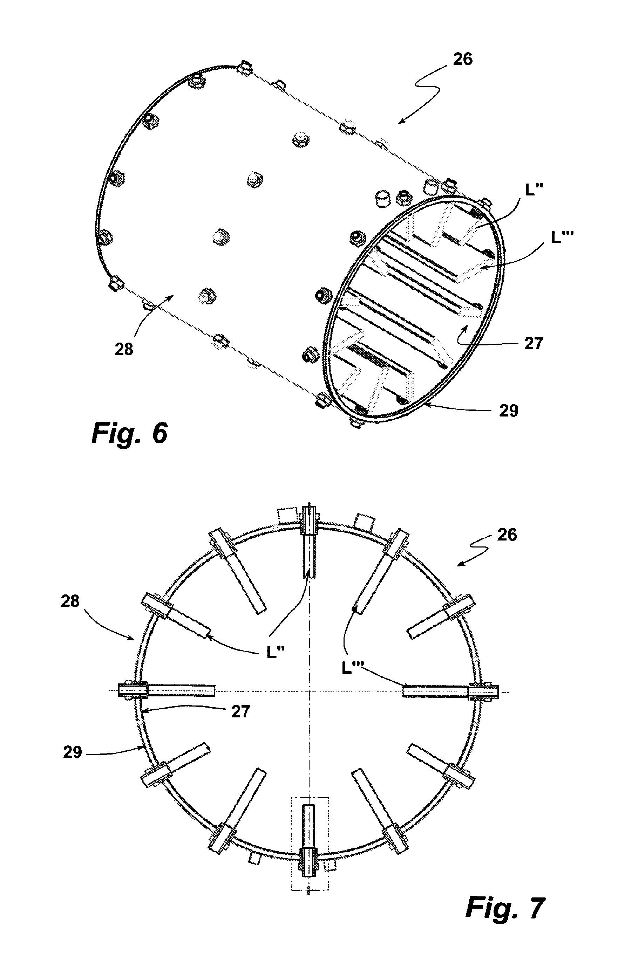

Figuren 6 bis 9 zeigen in einem weiteren Ausführungsbeispiel einen Mischbehälter für einen Temperiermischer, der wie auch der Mischer 1 der Figuren 1 bis 5 als Kühlmischer eingesetzt wird. Der Mischbehälter 26 ist, um eine Einsicht in denselben zu gestatten, ohne die endseitigen Kopfteile gezeigt. Der Mischbehälter 26 verfügt ebenso wie der Mischbehälter der vorangegangenen Figuren über von der Innenwand 27 abragende Hohlleisten L" und L"', die ebenso wie die Hohlleisten L, L' der vorbeschriebenen Ausführungsbeispiele mit Temperierflüssigkeit, insbesondere Kühlflüssigkeit durchströmt sind. Im Unterschied zu der Ausgestaltung der Mischbehälter 2, 2.1 der vorbeschriebenen Ausführungsbeispiele handelt es sich bei den Hohlleisten L" und L'" um solche, die mit ihren Anschlüssen den doppelwandig konzipierten Mischzylinder 28 durchgreifen. Somit liegen bei dem dargestellten Ausführungsbeispiel die Anschlüsse zum Anschließen der flüssigkeitsführenden Leitungen an der äußeren Mantelfläche des Mischbehälters 26. Dabei ist vorgesehen, dass die die Behälterwand durchgreifenden Anschlüsse der einzelnen Hohlleisten L", L"' nicht in unmittelbarer Flüssigkeitsverbindung mit der Flüssigkeitswegsamkeit zwischen der Behälterinnenwand 27 und der Behälteraußenwand 29 stehen.

Jede Hohlleiste L", L'" ist bei dem dargestellten Ausführungsbeispiel im Bereich ihres Zu- und Ablaufes sowie in einem mittleren Bereich an der Mischbehälterwand in der vorbeschriebenen Art und Weise befestigt. Dabei dient die zwischen den beiden Endbefestigungen befindliche mittlere Befestigung lediglich zum Halten einer Hohlleiste L" bzw. L"', während die beiden Endanschlüsse zusätzlich zum Anschließen an den Kühlflüssigkeitskreislauf vorgesehen sind.

Aus der Seitenansicht der Figur 7 wird deutlich, dass die Hohlleisten L", L"' eine unterschiedliche Höhe bei dem dargestellten Ausführungsbeispiel in Bezug auf die Innenwand 27 des Mischbehälters 26 aufweisen.

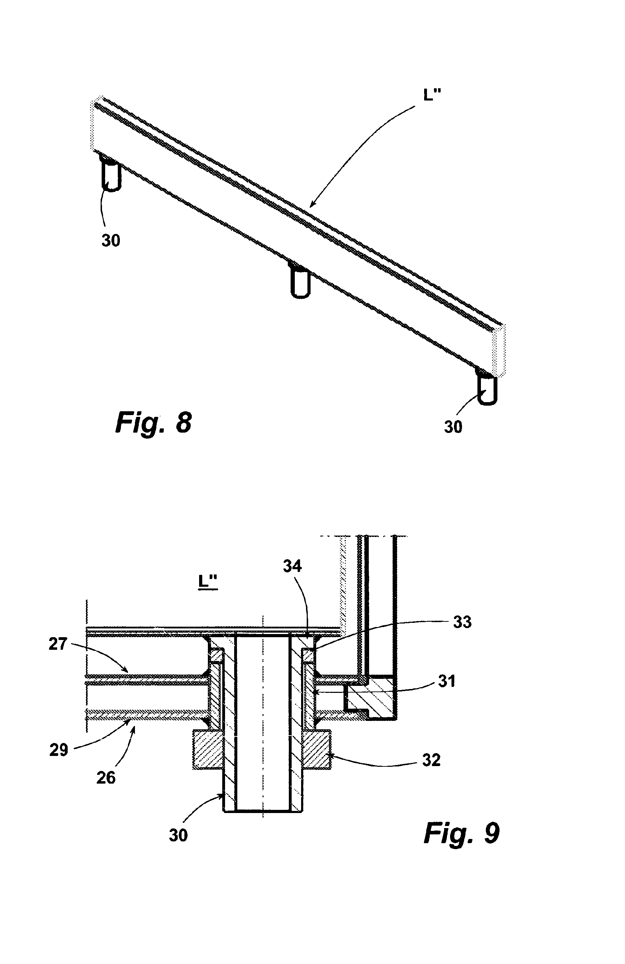

Figur 8 zeigt in einer perspektivischen Ansicht eine Hohlleiste L". Die Hohlleiste L" ist im Querschnitt rechteckförmig konzipiert und erstreckt sich im Wesentlichen über die gesamte Länge des in Figur 6 gezeigten Mischbehälterteils - des Mischzylinders 28.

In der Schnittdarstellung der Figur 9 ist der Durchgriff eines Flüssigkeitsanschlusses einer Hohlleiste L" dargestellt. Die aus der Innenwand 27 und der Außenwand 29 aufgebaute doppelwandige Behälterwand, die zwischen den beiden Wänden 27, 29 ebenfalls flüssigkeitsdurchströmt ist, verfügt zum Einsetzen eines Anschlussstutzens 30 der Hohlleiste L" über einen durch ein Rohrstück 31 gebildeten Durchlass durch die Behälterwand. Das Rohrstück 31 ist, wie in Figur 9 gezeigt, flüssigkeitsdicht in die doppelwandige Mischbehälterwand eingesetzt. Der Anschlussstutzen 30 durchgreift das Rohrstück 31 und ist an diesem mittels einer Mutter 32 festgesetzt. Ein Distanzstück 33 befindet sich zwischen dem Fuß 34 des Anschlussstutzens 30 und dem Rohrstück 31. Auf das aus dem Behälter 26 herausragende Ende des Anschlusses 30 ist eine in der Figur nicht dargestellte Verbindungsleitung aufgesetzt, um den Anschlussstutzen 30 mit dem Anschlussstutzen einer benachbart angeordneten Hohlleiste L"' oder L" zu verbinden. Die Hohlleisten L", L"' sind in Gruppen zusammengeschlossen, wie dieses in Bezug auf die Kühlmittelkanäle der Figuren 4 und 5 beschrieben ist.

Die in den Figuren 6 bis 9 beschriebene Konzeption des Anordnens von Hohlleisten innerhalb des Mischbehälters 26 erlaubt eine sehr flexible Auslegung der Mischbehälter. In Abhängigkeit von der jeweils gewünschten Anforderung werden mehr oder weniger Hohlleisten verbaut. Dieses ist abhängig von dem zu temperierenden, insbesondere zu kühlenden Material, der vorgesehenen Verweildauer desselben innerhalb des Mischbehälters 26 und der Größe desselben. Zudem ist eine Herstellung eines Mischbehälters mit Hohlleisten, wie zu dem Ausführungsbeispiel der Figuren 6 bis 9 beschrieben, einfacher als die Herstellung der Kanäle in dem Ausführungsbeispiel der Figuren 4 oder 5. Auch besteht die Möglichkeit, durch Austauschen einzelner Hohlleisten innerhalb eines solchen Behälters, wie zu dem Ausführungsbeispiel 6 bis 9 beschrieben, einen solchen an unterschiedliche Gegebenheiten anzupassen. So kann beispielsweise durch Einbau größerer Hohlleisten, mithin von Hohlleisten mit einer größeren Temperieroberfläche, die Leistungsfähigkeit des Mischers erhöht werden. Bei der Konzeption eines Kühlmischers, wie zu den Figuren 6 bis 9 beschrieben, besteht ebenfalls die Möglichkeit, dass Hohlleisten zur Vergrößerung der Temperierfläche aufeinander montiert werden und mithin eine erste, an der Behälterwand befestigte Hohlleiste auf ihrer von der Behälterwand wegweisenden schmalen Seite eine weitere Hohlleiste trägt. Diese steht in Flüssigkeitsverbindung mit der ersten, an der Behälterwand angeordneten Hohlleiste.

Die in dem Ausführungsbeispiel der Figuren 6 bis 9 beschriebene Konzeption, bei der die eingesetzten Hohlleisten die Mischbehälterwand durchgreifen und mittels Muttern festgelegt sind, gestattet auch einen Austausch derselben, wenn der Mischbehälter für die Zwecke des Mischen eines anderen Mischgutes umgerüstet werden soll.

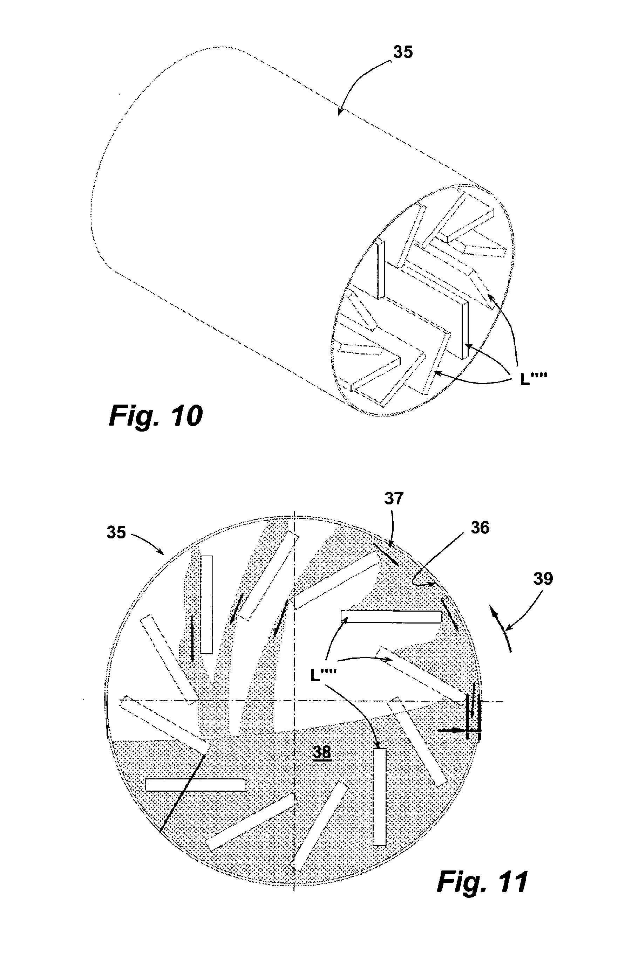

Figur 10 zeigt einen weiteren Mischbehälter 35 für einen Temperiermischer, beispielsweise einen als Kühlmischer benutzten Temperiermischer. Dieser ist prinzipiell konzipiert wie der Mischbehälter 26. Im Unterschied zu dem Mischbehälter 26 sind die Hohlleisten L"" gegenüber der Anordnung der Hohlleisten L", L'" des zuvor beschriebenen Ausführungsbeispiels gegenüber der Innenwand 36 des Mischbehälters 35 geneigt. Der Einfachheit halber sind die Anschlussstutzen der Hohlleisten L"", in den Figuren 10 und 11 nicht gezeigt.

Die Hohlleisten L"" des Mischbehälters 35 sind mit Abstand zur Innenwand 36 des doppelwandig konzipierten Mischbehälters 35 angeordnet. Somit befindet sich zwischen der Innenwand 36 des Behälters 35 und den Hohlleisten L"" ein Spalt 37, durch den, wie in Figur 11 dargestellt, Mischgut 38 hindurch treten kann. Wenn gewünscht, kann die Neigung der Hohlleisten L"" und/oder deren Abstand von der Innenwand 36 eingestellt werden. Durch die in Drehrichtung 39 weisende geneigte Anordnung der Hohlleisten L"" ist eine Materialmitnahme über einen größeren Winkelbetrag möglich. In Figur 11 sind mit den in dem Mischgut 38 eingetragenen Pfeilen die Bewegungsrichtung von Mischgut 38 bei einem Drehen des Mischbehälters 35 in der durch den Pfeil 39 gekennzeichneten Drehrichtung ersichtlich.

In Abhängigkeit von der jeweils vorgesehenen oder eingestellten Spaltbreite zwischen den Hohlleisten L"" und der Innenwand 36 des Mischbehälters 35 ist die Förderleistung der Hohlleisten L "" einstellbar. Als weitere Variable zur Bestimmung der Förderleistung kann die Drehzahl dienen, mit der der Mischbehälter 35 rotatorisch angetrieben wird.

Durch den Spalt zwischen den Hohlleisten L"" und der Innenwand 36 erfolgt eine Materialbewegung entgegen der Drehrichtung 39 des Mischbehälters 35 über einen relativ großen Drehwinkelbetrag, so dass die Kühlleistung eines solchermaßen konzipierten Mischbehälters 35 besonders effektiv ist.

Die zu den Figuren 6 bis 11 beschriebenen Mischbehälter sind in nicht näher dargestellter Art und Weise Teil eines Kühlmischers, wie dieser in den Figuren 1 bis 3 vom Prinzip her beschrieben ist. Die Mischbehälter 26, 35 sind um ihre Längsachse drehbar für die Zwecke des Mischens angetrieben. Die Drehachse befindet sich somit im Bereich der in den in diesen Figuren nicht dargestellten Stirnseiten.

Aus der Beschreibung der Erfindung wird deutlich, dass, da innerhalb des Mischbehälters im Gegensatz zu vorbekannten Mischern keine bewegbaren Teile angeordnet sind, auch eine Funkenbildungsgefahr auf ein Minimum reduziert ist.

Die Erfindung ist beispielhaft anhand von Kühlmischern beschrieben worden. Gleichermaßen lassen sich die beschriebenen Mischer ebenfalls zum Erwärmen eines Mischgutes einsetzen. Bei einer solchen Konzeption werden die bei den vorstehenden Ausführungsbespielen beschriebenen Kühlmittelwegsamkeiten mit einem gegenüber der Temperatur des Mischgutes auf einer höheren Temperatur befindlichen Medium beaufschlagt.

### Bezugszeichenliste

- 1: Kühlmischer
- 2, 2.1: Mischbehälter
- 3: Stellzylinder
- 4: Heizmischer
- 5: Mischgutzuführung
- 6: Befüllungsstutzen
- 7: Stirnseite
- 8: Scharnier
- 9: Drehdurchführung
- 10: Zulauf
- 11: Rücklauf
- 12: Zuleitung
- 13: Ableitung
- 14: Schwenkgestell
- 15: Grundgestell
- 16, 16.1: Führungsschiene
- 17, 17.1, 17.2: Rolle
- 18, 18.1: Elektromotor
- 19, 19.1: Halterollenpaar
- 20: Stirnseite
- 21: Entleerungsstutzen
- 22: Drehdurchführung
- 23: äußere Wand
- 24: Innenwand
- 25: Schott
- K: Kühlmittelkanal
- K₁, K₁': Hinkanal
- K₂, K₂': Rückkanal
- L, L', L", L"', L"": Hohlleiste
- R, R': Rotationsachse
- S: Schwenkachse
- 26: Mischbehälter
- 27: Innenwand
- 28: Mischzylinder
- 29: Außenwand
- 30: Anschlussstutzen
- 31: Rohrstück
- 32: Mutter
- 33: Distanzstück
- 34: Fuß
- 35: Mischbehälter
- 36: Innenwand
- 37: Spalt
- 38: Mischgut
- 39: Drehrichtung

## Patentansprüche

1. Mischer zum Temperieren eines aus Feststoffpartikeln bestehenden Mischgutes mit einem Mischbehälter (2, 2.1, 26, 35) zur Aufnahme des Mischgutes, welcher Behälter (2, 2.1, 26, 35) doppelwandig konzipiert ist und zumindest einen mit seiner Oberfläche zumindest teilweise in Kontakt mit den zu temperierenden Feststoffpartikeln gelangenden Temperiermittelkanal (K, K₁, K₂; K₁', K₂') aufweist, durch den bei einem Betrieb des Mischers (1) Temperiermittel gefördert wird, und mit einer Einrichtung zum Umwälzen des in dem Behälter (2, 2.1, 26, 35) befindlichen Mischgutes, wobei der Behälter (2, 2.1, 26, 35) um seine die beiden Stirnseiten (7, 20) durchstoßende Längsachse (R, R'), drehbar gelagert ist und als Umwälzeinrichtung ein motorischer Antrieb (17, 18, 18.1) zum Drehen des Behälters (2, 2.1, 26, 35) vorgesehen ist, **dadurch gekennzeichnet, dass** der Behälter (2, 2.1) umfänglich verteilt mehrere, insbesondere parallel zu seiner Drehachse (R, R') verlaufende Temperiermittelkanäle (K, K₁, K₂; K₁', K₂') und zur Vergrößerung seiner inneren Oberfläche in radialer Richtung nach innen vorspringende, als Hohlleisten (L, L', L", L"') ausgeführte Strukturen aufweist, wobei die nach innen vorspringenden Strukturen als Temperiermittelkanäle (K₁, K₂; K₁') ausgeführt sind.

2. Mischer nach Anspruch 1, **dadurch gekennzeichnet, dass** der Behälter (2, 2.1) an zumindest einer seiner beiden Stirnseiten (7, 20) einen Anschlussstutzen (6, 21) zum Anschließen des Behälters (2) an eine Mischgutzuführung (5) zum Zuführen von zu kühlendem Mischgut in den Behälter (2, 2.1) und/oder an eine Auslaufleitung zum Ausgeben des gekühlten Mischgutes trägt.

3. Mischer nach Anspruch 2, **dadurch gekennzeichnet, dass** der zumindest eine Anschlussstutzen (6, 21) zum lösbaren Anschließen desselben an die Mischgutzuführung (5) und/oder die Auslaufleitung ausgestaltet ist.

4. Mischer nach Anspruch 3, **dadurch gekennzeichnet, dass** der zumindest eine Anschlussstutzen (6, 21) das eine Teil einer zweiteiligen, vorzugsweise pneumatisch aktivierbaren Kupplung zum Anschließen des Anschlussstutzens (6, 21) an die Mischgutzuführung (5) und/oder die Auslaufleitung ist, wobei das zweite Teil einer solchen Kupplung der Mischgutzuführung (5) bzw. der Auslaufleitung zugeordnet ist.

5. Mischer nach einem der Ansprüche 1 bis 4, **dadurch gekennzeichnet, dass** der Behälter (2, 2.1) um eine quer zu seiner Drehachse (R, R') verlaufende Schwenkachse (S) zum Verstellen des Behälters (2, 2.1) aus seiner Befüllungsstellung und/oder aus seiner Entleerungsstellung in seine Mischstellung und umgekehrt schwenkbar gelagert ist.

6. Mischer nach einem der Ansprüche 1 bis 5, **dadurch gekennzeichnet, dass** der Behälter (2, 2.1) zu seiner Lagerung in dem Gestell (14) über zumindest zwei in radialer Richtung nach außen offene, jeweils zwei voneinander beabstandete Seitenwände aufweisende Führungsschienen (16, 16.1) verfügt, in die über den Umfang verteilt zumindest jeweils drei gestellseitig gehaltene Lagerelemente, etwa Rollen (17, 17.1, 17.2) oder Räder, eingreifen, wobei zumindest ein Lagerelement (17) einer solchen Lageranordnung als Teil der Umwälzeinrichtung angetrieben ist und zum Übertragen seiner Antriebsbewegung auf die Führungsschiene (16, 16.1) in diese zum Antrieb derselben eingreifend angeordnet ist.

7. Mischer nach Anspruch 6, **dadurch gekennzeichnet, dass** als Lagerelemente Rollen mit einer zylindrischen Mantelfläche vorgesehen sind und der Abstand der Seitenwände der Führungsschienen unter Berücksichtigung eines notwendigen Bewegungsspiels der Breite der darin eingreifenden Rollen entspricht.

8. Mischer nach Anspruch 6 oder 7, **dadurch gekennzeichnet, dass** der Kühlmischer über mehrere Halterollen oder Halterollenpaare (19, 19.1) verfügt, die außenseitig an zumindest einer Führungsschiene (16.1) zum Halten des Mischbehälters (2, 2.1) in Richtung seiner Längsachse verfügt.

9. Mischer nach einem der Ansprüche 1 bis 8, **dadurch gekennzeichnet, dass** die gesamte Innenwand (24) des Mischbehälters (2, 2.1) Teil eines oder mehrerer Temperiermittelkanäle (K, K₁, K₂; K₁', K₂') ist.

10. Mischer nach Anspruch 9, **dadurch gekennzeichnet, dass** die Hohlleisten (L", L"', L"") mit ihren Anschlussstutzen (30) die Innenwand (27) sowie die Außenwand (29) des Mischbehälters (26) durchgreifen und eine direkte Flüssigkeitswegsamkeit zwischen der Innenwand (27) und der Außenwand (29) und derjenigen des Anschlussstutzens (30) unterbunden ist.

11. Mischer nach Anspruch 10, **dadurch gekennzeichnet, dass** die Hohlleisten (L"") gegenüber einer Lotrechten zur Innenwand (36) des Mischbehälters (35), insbesondere in Drehrichtung (39) des Mischbehälters (35) geneigt sind.

12. Mischer nach Anspruch 11, **dadurch gekennzeichnet, dass** die Hohlleisten (L"") von der Innenwand (36) des Mischbehälters (35) beabstandet sind.

## Claims

1. Mixer for tempering a mixture consisting of solid particles with a mixture container (2, 2.1, 26, 35) for receiving the mixture, said container (2, 2.1, 26, 35) being of double-walled design and having at least one tempering agent duct (K, K₁, K₂; K₁', K₂') whose surface comes at least partly into contact with the solid particles to be tempered, with tempering agent being delivered through said duct during operation of the mixer (1), and with a device for circulating the mixture that is in the container (2, 2.1, 26, 35), wherein the container (2, 2.1, 26, 35) is rotatably supported about its longitudinal axis (R, R') that breaks through the two faces (7, 20) and a motor drive (17, 18, 18.1) is provided as a circulation device for rotating the container (2, 2.1, 26, 35), **characterised in that** the container (2, 2.1) has, distributed around the periphery, several tempering agent ducts (K, K₁, K₂; K₁', K₂') notably running parallel to the container's axis of rotation (R, R') and, for enlarging the container's inner surface, has structures protruding inwards in the radial direction and designed as hollow strips (L, L', L", L"'), wherein the structures protruding inwards are designed as tempering agent ducts (K₁, K₂; K₁').

2. Mixer according to claim 1, **characterised in that** the container (2, 2.1) carries, on at least one of its two faces (7, 20), a connection port (6, 21) for connecting the container (2) to a mixture feed (5) for feeding mixture to be cooled into the container (2, 2.1) and/or to an outlet line for dispensing the cooled mixture.

3. Mixer according to claim 2, **characterised in that** the at least one connection port (6, 21) is designed for detachable connection of the same to the mixture feed (5) and/or the outlet line.

4. Mixer according to claim 3, **characterised in that** the at least one connection port (6, 21) is the one part of a two-part, preferably pneumatically activatable coupling for connecting the connection port (6, 21) to the mixture feed (5) and/or the outlet line, wherein the second part of such a coupling is allocated to the mixture feed (5) or the outlet line.

5. Mixer according to any one of claims 1 to 4, **characterised in that** the container (2, 2.1) is pivotably supported about a pivot axis (S) that runs transversally to its axis of rotation (R, R') for adjusting the container (2, 2.1) from its filling position and/or from its emptying position to its mixing position and vice versa.

6. Mixer according to any one of claims 1 to 5, **characterised in that** the container (2, 2.1), for its support in the frame (14), has at least two guide rails (16, 16.1) each having two side walls spaced from each other that are open to the outside in the radial direction, said guide rails being engaged, distributed over the circumference, by at least three frame-held support elements each such as rolls (17, 17.1, 17.2) or wheels, wherein at least one support element (17) of such a support arrangement is driven as part of the circulation device and, for transferring its drive motion to the guide rail (16, 16.1), is arranged to engage said guide rail for driving the same.

7. Mixer according to claim 6, **characterised in that** rolls with a cylindrical surface area are provided as support elements and the distance of the side walls of the guide rails, taking into account a necessary movement play, corresponds to the width of the rolls engaging therein.

8. Mixer according to claim 6 or 7, **characterised in that** the cooling mixer has several holding rolls or holding roll pairs (19, 19.1) externally on at least one guide rail (16.1) for holding the mixture container (2, 2.1) in the direction of its longitudinal axis.

9. Mixer according to any one of the claims 1 to 8, **characterised in that** the entire internal wall (24) of the mixture container (2, 2.1) is part of one or several tempering agent ducts (K, K₁, K₂; K₁', K₂').

10. Mixer according to claim 9, **characterised in that** the hollow strips (L", L"', L"") with their connection ports (30) reach through the internal wall (27) and the external wall (29) of the mixture container (26) and a direct liquid path between the internal wall (27) and the external wall (29) and that of the connection port (30) is prevented.

11. Mixer according to claim 10, **characterised in that** the hollow strips (L"") are inclined in respect of a vertical to the internal wall (36) of the mixture container (35), especially in the direction of rotation (39) of the mixture container (35).

12. Mixer according to claim 11, **characterised in that** the hollow strips (L"") are spaced from the internal wall (36) of the mixture container (35).

## Revendications

1. Mélangeur pour tempérer un mélange constitué de particules solides comprenant un récipient mélangeur (2, 2.1, 26, 35) destiné à contenir le mélange, lequel récipient (2, 2.1, 26, 35) est conçu à double paroi et présente au moins un canal à médium de tempérage (K, K₁, K₂ ; K₁', K₂') entrant par sa surface au moins partiellement en contact avec les particules solides à tempérer, grâce auquel, lorsque le mélangeur (1) est en fonctionnement, un médium de tempérage est transporté, et comprenant un dispositif pour brasser le mélange se trouvant dans le récipient (2, 2.1, 26, 35), lequel récipient (2, 2.1, 26, 35) étant logé en rotation autour de son axe longitudinal (R, R') traversant les deux faces frontales (7, 20) et un entraînement motorisé (17, 18, 18.1) étant prévu en guise de dispositif de brassage pour mettre le récipient (2, 2.1, 26, 35) en rotation, **caractérisé en ce que** le récipient (2, 2.1) présente plusieurs canaux à médium de tempérage (K, K₁, K₂; K₁', K₂') répartis sur sa circonférence, s'étendant notamment parallèlement à son axe de rotation (R, R') et, afin d'agrandir sa surface intérieure dans le sens radial, des structures réalisées en saillie vers l'intérieur sous la forme de listel creux (L, L', L", L"'), les structures en saillie vers l'intérieur étant réalisées sous forme de canaux à médium de tempérage (K₁, K₂; K₁').

2. Mélangeur selon la revendication 1, **caractérisé en ce que** le récipient (2, 2.1) supporte sur l'une au moins de ses deux faces frontales (7, 20), une tubulure de raccordement (6, 21) destinée à raccorder le récipient (2) à une arrivée (5) de mélange pour acheminer le mélange à refroidir dans le récipient (2, 2.1) et/ou une conduite d'écoulement pour distribuer le mélange refroidi.

3. Mélangeur selon la revendication 2, **caractérisé en ce que** l'au moins une tubulure de raccordement (6, 21) est conformée pour se raccorder de manière amovible à l'arrivée (5) de mélange et/ou à la conduite d'écoulement.

4. Mélangeur selon la revendication 3, **caractérisé en ce que** l'au moins une tubulure de raccordement (6, 21) fait partie d'un mécanisme de couplage en deux parties, activable de préférence de façon pneumatique, destiné à raccorder la tubulure de raccordement (6, 21) à l'arrivée de mélange (5) et/ou à la conduite d'écoulement, la seconde partie d'un tel mécanisme de couplage étant affectée à l'arrivée (5) de mélange ou à la conduite d'écoulement.

5. Mélangeur selon l'une des revendications 1 à 4, **caractérisé en ce que** le récipient (2, 2.1) est logé de façon pivotante sur un axe de pivotement (S) s'étendant transversalement par rapport à son axe de rotation (R, R') afin de transposer le récipient (2, 2.1) de sa position de remplissage et/ou de sa position de vidange en position de mélange et vice-versa.

6. Mélangeur selon l'une des revendications 1 à 5, **caractérisé en ce que** le récipient (2, 2.1) dispose afin d'être logé sur le châssis (14) d'au moins deux rails de guidage (16, 16.1) présentant au moins deux parois latérales à distance l'une de l'autre, ouvertes vers l'extérieur dans le sens radial, dans lesquelles s'engagent au moins trois éléments de palier maintenus du côté du châssis, répartis sur la circonférence, par exemple des roulettes (17, 17.1, 17.2) ou des roues, au moins un élément de palier (17) d'une telle disposition de palier, en tant que partie du dispositif de brassage, étant entraîné et disposé, afin de transmettre son mouvement d'entraînement sur le rail de guidage (16, 16.1), de façon à s'engager dans ce dernier afin de l'entraîner.

7. Mélangeur selon la revendication 6, **caractérisé en ce qu'**il est prévu, en tant qu'éléments de palier, des roulettes avec une surface d'enveloppe cylindrique et que la distance des parois latérales des rails de guidage correspond, en tenant compte de la latitude de mouvement nécessaire, à la largeur des roulettes qui s'y engagent.

8. Mélangeur selon la revendication 6 ou 7, **caractérisé en ce que** le mélangeur de refroidissement dispose de plusieurs roulettes de maintien ou de paires de roulettes de maintien (19, 19.1) disposées sur la face extérieure, sur au moins un rail de guidage (16.1) afin de maintenir le récipient mélangeur (2, 2.1) dans le sens de son axe longitudinal.

9. Mélangeur selon l'une des revendications 1 à 8, **caractérisé en ce** l'intégralité de la paroi intérieure (24) du récipient mélangeur (2, 2.1) est une partie d'un ou de plusieurs canaux à médium de tempérage (K, K₁, K₂; K₁', K₂').

10. Mélangeur selon la revendication 9, **caractérisé en ce que** les guides creux (L", L"', L"") traversent avec leurs tubulures de raccordement (30) la paroi intérieure (27) ainsi que la paroi extérieure (29) du récipient mélangeur (26) et sont tributaires d'une accessibilité directe des liquides entre la paroi intérieure (27) et la paroi extérieure (29) et celles de la tubulure de raccordement (30).

11. Mélangeur selon la revendication 10, **caractérisé en ce que** les guides creux (L"") sont inclinés par rapport à une verticale de la paroi intérieure (36) du récipient mélangeur (35), notamment dans le sens de rotation (39) du récipient mélangeur (35).

12. Mélangeur selon la revendication 11, **caractérisé en ce que** les guides creux (L"") sont à distance de la paroi intérieure (36) du récipient mélangeur (35).
